# EUROPEAN PATENT SPECIFICATION

(11) **EP 3 360 696 B1**
(45) Date of publication and mention of the grant of the patent: **18.03.2020**
(21) Application number: 16853445.1
(22) Date of filing: 26.09.2016
(51) Int. Cl.: B60C 5/01, B60C 9/00, C08K 9/04, C08L 75/04, C08L 77/00, D06M 15/41, D02G 3/48, B60C 9/02, B60C 9/04

(54) **TIRE**
REIFEN
PNEUMATIQUE

(30) Priority: 07.10.2015 JP 2015199628
(43) Date of publication of application: 15.08.2018
(73) Proprietor: Bridgestone Corporation, Tokyo 104-8340 (JP)
(72) Inventor: GIZA, Emil, Tokyo 104-8340 (JP)
(74) Representative: Oxley, Robin John George
(86) International application number: PCT/JP2016/078304
(87) International publication number: WO 2017/061291

(56) References cited:
- EP-A1- 2 065 220
- EP-A1- 2 821 250
- EP-A1- 2 826 641
- JP-A- H03 143 701
- JP-A- 2003 104 008
- JP-A- 2007 245 811
- JP-A- 2009 161 872
- JP-A- 2012 046 030
- JP-A- 2012 214 926
- JP-A- 2014 214 300
- JP-A- 2015 016 834

## Description

### Technical Field

The present invention relates to a tire.

### Background Art

In recent years, from the viewpoints of weight reduction and ease of recycling, it is known that a thermoplastic polymer material such as a thermoplastic elastomer (TPE) or a thermoplastic resin is used as a tire frame member. Such a tire is economical and highly recyclable. From the viewpoint of increasing the strength of the tire, it is conceivable to dispose a reinforcing layer on a framework member. A cord member made of an inorganic material or an organic material is used as the reinforcing layer, and a specific organic fiber is particularly advantageous from the viewpoints of light weight, economic efficiency, and strength. In the reinforcing layer, by coating the cord member with rubber or a resin material, rigidity in a tire radial direction can be maintained.

In this regard, as a technique for adhering an organic fiber and rubber, for example, there is a technique of adhering a fiber with an epoxy compound or an isocyanate compound (for example, Japanese Patent Application Laid-Open (JP-A) No. 2004-339299 and International Publication (WO) No. 2014/074404). An adhering method using a resorcinol-formaldehyde-latex resin in the case of adhering rubber and a fiber is known (for example, JP-A No. 2001-73247). Reference is also made to EP 2821250, JP 2003-104008 and JP 2015-016834.

### SUMMARY OF INVENTION

### Technical Problem

The methods according to the above patent documents assume the adhesiveness between an organic fiber and rubber, and do not assume the case of adhering an organic fiber and a resin material.

There is still room for improvement in adhesion between a resin material and a cord member in the case of coating the cord member used for the reinforcing layer with the resin material.

Therefore, development of a tire including a reinforcing layer sufficiently adhering a cord member and a resin material is awaited.

### Solution to Problem

A tire includes: a tire frame member made of resin and including a bead portion and a side portion positioned on a tire radial direction outer side of the bead portion; and a reinforcing layer including an organic fiber and a resin material with which the organic fiber is coated, wherein the organic fiber includes: a cord member including at least one of an aramid fiber material or a polyester fiber material; an undercoat layer provided on the cord member and formed from a first composition including at least one of an epoxy compound or an isocyanate compound; and an adhesive layer provided on the undercoat layer and formed from a second composition including a resorcinol-formaldehyde resin, characterized in that the tire frame member made of resin excludes vulcanized rubber.

### Advantageous Effects of Invention

According to the present disclosure, there is provided a tire including a reinforcing layer in which a cord member and a resin material are sufficiently adhered.

### BRIEF DESCRIPTION OF THE DRAWINGS

Fig. 1A is a schematic view illustrating a cord member of a tire according to one embodiment of the present disclosure.
Fig. 1B is a schematic view illustrating an organic fiber of a tire according to one embodiment of the present disclosure.
Fig. 1C is an enlarged schematic view illustrating an organic fiber of a tire according to one embodiment of the present disclosure.
Fig. 2 is a perspective view illustrating a state in which a tire of a first embodiment is sectioned along a tire rotational axis.
Fig. 3 is an enlarged cross-sectional view of a bead portion of the tire of the first embodiment.
Fig. 4 is a perspective view illustrating a state in which a tire of a second embodiment is sectioned along a tire rotational axis.
Fig. 5 is a side view illustrating an example of the arrangement of a reinforcing layer of the second embodiment.
Fig. 6 is a side view illustrating other example of the arrangement of the reinforcing layer of the second embodiment.
Fig. 7A is a view illustrating a reinforcing layer whose inner side end in a tire radial direction is small in width.
Fig. 7B is a perspective view illustrating a state in which an inner side end in a tire radial direction of a reinforcing layer is wound around a bead core and fixed.
Fig. 8A is a cross-sectional view illustrating an example in which an inner side end in a tire radial direction of a reinforcing layer is fixed to a side portion of a bead core.
Fig. 8B is a cross-sectional view illustrating an example in which an inner side end in a tire radial direction of a reinforcing layer is disposed away from a bead core.
Fig. 9 is a perspective view illustrating a state in which a tire of a fourth embodiment is sectioned along a tire rotational axis
Fig. 10A is a cross-sectional view illustrating a state in which a reinforcing layer is thermally welded to a bead core.
Fig. 10B is a cross-sectional view illustrating a state in which a tire frame member is molded; the reinforcing layer and the bead core shown in Fig. 10A are integrally formed; and a belt layer is disposed on a crown portion of the tire frame member.
Fig. 10C is a cross-sectional view illustrating a tire in which rubber is molded to the outer surface of the tire frame member.
Fig. 11 is a cross-sectional view illustrating a variation of a state in which a reinforcing layer and a bead core are joined to each other.
Fig. 12 is a cross-sectional view illustrating a variation of a state in which a reinforcing layer and a bead core are joined to each other.
Figs. 13A and 13B are cross-sectional views each illustrating an example in which a terminal end on a bead core side of a reinforcing layer is positioned between cords of a bead core configured by a strand bead in a tire radial direction.
Fig. 13C is a cross-sectional view illustrating an example in which a terminal end of a reinforcing layer is positioned between cords of a bead core configured by a mono-strand bead in a tire width direction.
Fig. 13D is a cross-sectional view illustrating an example in which a terminal end of a reinforcing layer is positioned between cords of a bead core configured by a strand bead in a tire width direction.
Fig. 14A is a cross-sectional view illustrating a state in which a terminal end on a bead core side of a reinforcing layer is disposed between cords of the bead core.
Fig. 14B is a cross-sectional view illustrating a state in which a reinforcing layer is wound around a bead core.

### DESCRIPTION OF EMBODIMENTS

### Tire

A tire according to the present disclosure includes: a tire frame member made of resin and including a bead portion and a side portion positioned on a tire radial direction outer side of the bead portion; and a reinforcing layer including an organic fiber and a resin material with which the organic fiber is coated, wherein the organic fiber includes: a cord member including at least one of an aramid fiber material or a polyester fiber material; an undercoat layer provided on the cord member and formed from a first composition including at least one of an epoxy compound or an isocyanate compound; and an adhesive layer (hereinafter, referred to as an "RF layer" if appropriate) provided on the undercoat layer and formed from a second composition including a resorcinol-formaldehyde resin, characterized in that the tire frame member made of resin excludes vulcanized rubber.

As described above, the organic fiber including the cord member in the reinforcing layer is configured so as to include three constituent elements of the specific cord member, the undercoat layer, and the RF layer, and the respective constituent elements are adhered, whereby the organic fiber is strongly adhered to the resin material included in the reinforcing layer and is fixed in a case in which the organic fiber is coated with the resin material included in the reinforcing layer. Since the reinforcing layer is formed from the resin material, an adhesive force between the reinforcing layer and the tire frame member can be increased as compared with the case of using rubber.

In the present specification and the like, "to" representing a range including numerical values of the upper and lower limit thereof.

The value of the adhesive strength between the organic fiber and the resin material can be determined using a method of measuring an adhesive force between vulcanized rubber and an organic fiber cord in a test piece as described in International Publication (WO) No. 2010/125992, for example. That is, the adhesive strength between the organic fiber and the resin material included in the test piece is determined by a test method in accordance with "7. Peeling Test" as defined in JIS K6301: 1995.

The details of the present disclosure are described below.

### Reinforcing Layer

A reinforcing layer according to the present disclosure includes an organic fiber and a resin material with which the organic fiber is coated. The position at which the reinforcing layer is disposed is not particularly limited, and the reinforcing layer may be disposed at the side portion of the tire frame member. Here, "the reinforcing layer is disposed at the side portion" includes an aspect in which the reinforcing layer is provided inside the tire frame member itself, and an aspect in which the reinforcing layer is arranged on the inner surface or the outer surface of the tire frame member.

As described above, the reinforcing layer is configured so as to include the organic fiber and the resin material with which the organic fiber is coated. Here, the organic fiber may be fully coated with the resin material, or the reinforcing layer may have a portion where the organic fiber is not coated with the resin material. The reinforcing layer may be, for example, a layer extending from the bead portion of the tire to the side portion and disposed side by side at intervals in a tire circumferential direction.

It is preferable to adjust the thickness of the reinforcing layer appropriately according to the purpose, such as the material or thickness of the organic fiber.

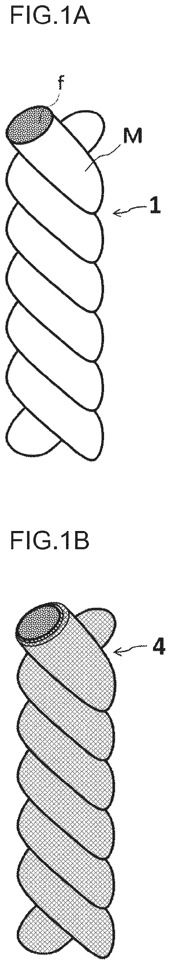

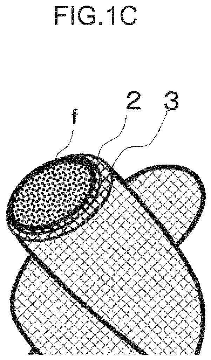

Hereinbelow, a specific example of the structure of the reinforcing layer is described below with reference to Fig. 1, and respective members and layers are described.

### Organic Fiber

The organic fiber according to the present disclosure includes a cord member including at least one of an aramid fiber material or a polyester fiber material (hereinafter referred to as a cord member); an undercoat layer provided on the cord member and formed from a first composition including at least one of an epoxy compound or an isocyanate compound; and an adhesive layer provided on the undercoat layer and formed from a second composition including a resorcinol-formaldehyde resin. It is preferable that the cord member included in the organic fiber is a single twisted multifilament obtained by twisting a plurality of monofilaments, or is obtained by twisting two or more of the multifilaments. Depending on the purpose, for example, only one multifilament may be used, or only a monofilament may be used without using a multifilament. Here, "a plurality of' means ten or more.

Here, "including at least one of an aramid fiber material or a polyester fiber material" means that the cord member may be a cord-like member including a fiber material of at least one of an aramid fiber material or a polyester fiber material, or may be a member including both the members. For example, a multifilament including at least one of an aramid fiber material or a polyester fiber material can be used as the cord member.

The structure of the organic fiber is specifically described with reference to Fig. 1. Fig. 1A is a schematic view for illustrating a cord member 1 included in an organic fiber. The cord member 1 shown in Fig. 1A is formed by assembling a predetermined number of monofilaments f and twisting two of multifilaments M formed by applying a predetermined number of twists to the monofilaments f. Here, the cord member 1 can be appropriately prepared in consideration of, for example, the number and the number of twists of the monofilaments f to be assembled, and the number, the twisting, and the material of the multifilaments M to be assembled.

The fineness of all the filaments included in the cord member 1 is not particularly limited. For example, from the viewpoint of further improving the adhesive strength between the organic fiber and the resin material, the fineness may be from 500 dtex/2 to 3000 dtex/2.

Fig. 1B is a schematic view of an organic fiber 4 according to the present disclosure, and illustrates a schematic cross section in a case in which a multifilament included in the organic fiber 4 is sectioned in a direction perpendicular to a fiber axis direction. Fig. 1C is an enlarged schematic sectional view of a multifilament included in the organic fiber 4 shown in Fig. 1B. As shown in Fig. 1C, the organic fiber 4 has a structure in which an undercoat layer 2 and an RF layer 3 are layered in this order around the cord member 1. The undercoat layer 2 is adhered to the cord member 1, that is, each of two multifilaments. The undercoat layer 2 may penetrate from the outside to the inside of the multifilament. That is, the undercoat layer 2 may be present so as to infiltrate between the monofilaments for forming the multifilaments.

In the organic fiber 4, between the cord member 1 and the undercoat layer 2, and between the undercoat layer 2 and the RF layer 3, materials for forming respective layers are adhered to each other. The organic fiber 4 can be used as a reinforcing layer in a state in which the organic fiber 4 is partially or entirely coated with the resin material as described later.

As shown in Fig. 1C, the undercoat layer 2 is provided on the cord member 1, and covers the surface of the cord member 1. One surface of the undercoat layer 2 adhered to the surface of the cord member 1, the other surface thereof adhered to the RF layer 3. The undercoat layer 2 is preferably adhered and provided so as to cover the entire surface of the cord member 1. However, as long as the effects of the tire according to the present disclosure are not impaired, the undercoat layer 2 may have an area not adhered to the surface of the cord member 1 in a part of the surface.

The RF layer 3 is provided on the undercoat layer 2, and covers the surface of the undercoat layer 2. One surface of the RF layer 3 may be adhered onto the undercoat layer 2. It is preferable that the RF layer 3 is adhered and provided so as to cover the entire surface of the undercoat layer 2. However, as long as the effects of the tire according to the present disclosure are not impaired, the RF layer 3 may have an area not adhered to the surface of the undercoat layer 2 in a part of the surface. As described above, the outer circumferential surface of the RF layer 3 is covered with the resin material, and is adhered to the resin material in a case in which the organic fiber 4 is coated with the resin material in order to form the reinforcing layer.

It is preferable to appropriately set the count of the organic fibers depending on the type of the cord member to be used and the type of the tire. For example, preferable aspects of the reinforcing layer include one in which the organic fibers obtained by twisting the cord member are disposed side by side in a row at regular intervals with the count of about 50 per 50 mm in a case in which the diameter of the cord member is 0.5 mm. Even though the counting of the organic fibers is uniform over the reinforcing layer, the cord member may be provided with spacing below tread grooves according to the shape of the tread.

Examples of the aramid fiber material for forming the cord member include a para-aramid fiber and a meta-aramid fiber. Examples of the para-aramid fiber include m-phenylene isophthalamide, and examples of the meta-aramid fiber include p-phenylene terephthalamide. Examples of m-phenylene isophthalamide include "KEVLAR" manufactured by Du Pont-Toray Co., Ltd., and "TWARON" and "TECHNORA" manufactured by Teijin Techno Products Limited. Examples of p-phenylene terephthalamide include "NOMEX" manufactured by Du Pont Co., Ltd., and "CONEX" manufactured by Teijin Techno Products Limited. These fiber materials may be used singly as the cord member, or two or more of these fiber materials may be used in combination.

Among them, a para-aramid fiber is preferably used from the viewpoint of an adhesive strength between the cord member and the undercoat layer.

Examples of the polyester fiber material for forming the cord member include polyethylene terephthalate (PET), polyethylene naphthalate (PEN), and polytrimethylene terephthalate (PTT). These fiber materials may be used singly as the cord member, or two or more of the fiber materials may be used in combination. Among them, polyethylene terephthalate (PET) or polyethylene naphthalate (PEN) is preferably used from the viewpoint of the adhesive strength between the cord member and the undercoat layer.

Either of the aramid fiber material or the polyester fiber material may be used singly as the cord member, or the respective fiber materials may be mixed for use. In this case, either of these fiber materials may be used singly in a single cord member, or the respective fiber materials may be mixed for use. Furthermore, all of the cord members included in the large number of organic fibers used for the reinforcing layer may be made of a single type of fiber material, or different types of fiber materials may be used between the organic fibers.

The cord member may include other fiber materials other than the aramid fiber material and the polyester fiber material. For example, plural monofilaments composed of at least one of the aramid fiber material or the polyester fiber material and plural monofilaments composed of other type of fiber material are assembled, and a predetermined number of twists are applied to the assembled article, thereby obtaining a multifilament.

In addition to the aramid fiber material and the polyester fiber material, the cord member may include an additive such as an antioxidant such as a styrenated phenol or a hindered phenol, an antifoaming agent such as a silicone antifoaming agent, higher alcohol antifoaming agent or mineral oil antifoaming agent, a reaction terminator, or an anti-freezing agent, if necessary.

### Undercoat Layer

The undercoat layer is a layer provided on the cord member and formed from a first composition including at least one of an epoxy compound or an isocyanate compound. The "layer formed from a first composition" means a layer formed by reacting a compound included in the first composition, for example, a layer formed from a compound derived from at least one of an epoxy compound or an isocyanate compound. The epoxy compound and the isocyanate compound included in the first composition are described below.

Examples of the epoxy compound include a reaction product of a polyhydric alcohol and epichlorohydrin such as diethylene glycol diglycidyl ether, polyethylene diglycidyl ether, polypropylene glycol diglycidyl ether, neopentyl glycol diglycidyl ether, 1,6-hexanediol diglycidyl ether, glycerol polyglycidyl ether, trimethylolpropane polyglycidyl ether, polyglycerol polyglycidyl ether, pentaerythiol polyglycidyl ether, diglycerol polyglycidyl ether, or sorbitol polyglycidyl ether; a novolac epoxy resin such as a phenol novolac epoxy resin or a cresol novolac epoxy resin; and a bisphenol A epoxy resin.

Examples of the isocyanate compound include a blocked isocyanate group-containing compound, and examples thereof include a compound having a blocked isocyanate group produced by reaction with a blocking agent for an isocyanate group, a compound having an isocyanate group which is unreacted with a blocking agent for an isocyanate group, and a compound having an isocyanate group generated by dissociation of the blocking agent of the blocked isocyanate group.

A blocked isocyanate compound obtained by blocking an organic polyisocyanate compound such as diphenylmethane diisocyanate (MDI) or tolylene diisocyanate (TDI) with a blocking agent is preferably used as the blocked isocyanate compound. Examples of the blocking agent include phenols such as phenol, thiophenol, chlorophenol, cresol, resorcinol, p-sec-butylphenol, p-tert-butylphenol, p-sec-amylphenol, p-octylphenol, or p-nonylphenol; secondary or tertiary alcohols such as isopropyl alcohol or tert-butyl alcohol; aromatic secondary amines such as diphenylamine; phthalic acid imides; lactams such as δ-valerolactam; caprolactams such as ε-caprolactam; active methylene compounds such as dialkyl malonate, acetylacetone, or acetoacetate alkyl ester; ketoximes such as acetoxime, methyl ethyl ketoxime, or cyclohexanone oxime; and basic nitrogen compounds such as 3-hydroxypyridine, and acidic sodium sulfites.

Phenol, ε-caprolactam, and ketoxime can be preferably used as the blocking agent.

Examples of a water dispersible compound containing a component obtained by blocking the diphenylmethane diisocyanate with a thermally dissociable blocking agent include a reaction product obtained by blocking diphenylmethane diisocyanate with a known blocking agent which blocks an isocyanate group. Specifically, a commercially available blocked polyisocyanate compound such as ELASTRON BN 69 or BN-27 manufactured by Dai-ichi Kogyo Seiyaku Co., Ltd. can be used.

The undercoat layer can be formed by polymerizing the first composition. The first composition for forming the undercoat layer may further include, as a component other than the epoxy compound and the isocyanate compound, a water-soluble polymer or a thermoplastic high molecular weight polymer as long as the effects of the tire according to the present disclosure are not impaired. In a case in which these polymers or the like are appropriately added to the first composition, brittleness and easiness of breakage of the undercoat layer is improved, and further adhesiveness to the cord member and the RF layer is enhanced.

The number average molecular weight of each of the epoxy compound and the isocyanate compound in the first composition is not particularly limited, and it is preferably from 100 to 10000, more preferably from 300 to 5000, and still more preferably from 1000 to 3000.

The content of the compound derived from at least one of the epoxy compound or the isocyanate compound included in the undercoat layer is not particularly limited, and it is preferably from 2% by mass to 20% by mass and more preferably from 3% by mass to 10% by mass in terms of solid content.

### Adhesive Layer

The adhesive layer (RF layer) is a layer provided on the undercoat layer, and is a layer formed from a second composition including a resorcinol-formaldehyde resin. The "layer formed from a second composition including a resorcinol-formaldehyde resin" is a layer formed by reacting the resorcinol-formaldehyde resin included in the second composition.

The resorcinol-formaldehyde resin for forming the RF layer (hereinafter also referred to as a resorcinol-formaldehyde condensate) is a compound obtained by condensation of formaldehyde with a phenol compound partially including at least resorcinol.

The resorcinol-formaldehyde condensate is preferably a resol resin having few branches (the form of a general phenol resin used as an adhesive). The resorcinol-formaldehyde condensate in which a methylol group and a dimethylene ether bond (dibenzyl ether bond) do not remain and a condensation reaction does not almost proceed by itself even though receiving heating, that is, stability is high, is preferable. For example, a percentage of a methylene bond in the total number of bonding sites between phenolic compounds can be preferably 90% or more, more preferably 95% or more, and still more preferably 97% or more. That is, it is considered that the resorcinol-formaldehyde condensate in which several phenolic compound molecules are almost linearly bonded by nearly only methylene bonds is preferable.

The resorcinol-formaldehyde condensate is that a part or the whole of the phenolic compounds to be bonded by a portion derived from formaldehyde is resorcinol. The resorcinol-formaldehyde condensate may be modified as described in JP-A No. 2014-001270.

The molar ratio (F/R) of formaldehyde (F) and resorcinol (R) used for forming the RF layer can be appropriately selected according to the purpose.

The resorcinol-formaldehyde condensate can be obtained by adding formaldehyde to resorcinol dissolved in a solvent and stirring and mixing the resultant at a predetermined temperature for a predetermined time. As the solution used in this case, acidic, neutral or alkaline water, or an organic solvent such as acetone or alcohol can be used. It is preferable to use alkaline or neutral water in order to sufficiently carry out a resorcinol-formaldehyde condensation reaction (resol formation reaction). This resol formation reaction is usually carried out preferably at pH 8.0 or higher, and more preferably from 8.5 to 10.0.

Here, the alkaline water is prepared by dissolving sodium hydroxide, lithium hydroxide, potassium hydroxide, ammonium hydroxide, or an organic amine such as monomethylamine or ammonia in water.

The alkaline water can also be used in a state where the alkaline water is dispersed in neutral water with a ball mill or a sand mill using an arbitrary anionic surfactant. In this case, in order to effectively develop an adhesive force, it is preferable to reduce the amount of the surfactant to such an extent that the dispersed state does not deteriorate.

The RF layer can be formed by, for example, applying a second composition onto the undercoat layer and reacting the second composition with the undercoat layer to form an adhesive layer (RF layer) adhered to the undercoat layer. In this reaction, the resorcinol-formaldehyde condensate reacts with a functional group on the surface of the undercoat layer. Furthermore, the condensates sterically entangled with each other and firmly form the RF layer adhered to the undercoat layer. In this case, the reaction of the second composition is preferably carried out by heating, and a reaction temperature during heating is preferably from 160°C to 180°C.

The content of the resorcinol-formaldehyde resin included in the RF layer is not particularly limited, and it is preferably from 2% by mass to 20% by mass, and more preferably from 3% by mass to 10% by mass in terms of solid content.

The total content of the undercoat layer and the adhesive layer in the organic fiber is preferably from 0.5% by mass to 3.0% by mass with respect to the total mass of the organic fiber. In a case in which the content is 0.5% by mass or more, the adhesiveness between the cord member 1 and the undercoat layer 2 can be further improved, and the adhesion strength between the organic fiber and the resin material can be further enhanced. In a case in which the content is 3.0% by mass or less, the reinforcing layer can be made lighter, which provides excellent economic efficiency. Here, the total content of the undercoat layer and the adhesive layer can be calculated, for example, by subtracting the mass of the organic fiber before adhesion and impregnation of the first composition and the second composition as described below, from the mass of the organic fiber after adhesion and impregnation of each of the first composition and the second composition to the cord member 1, followed by drying.

### Resin Material

The resin material is included in the reinforcing layer, and is a material with which the organic fiber is coated. It is intended that the resin material does not include conventional natural rubber or vulcanized rubber such as synthetic rubber.

Both a thermoplastic resin and a thermosetting resin can be used as the resin material. Here, the thermoplastic resin (including a thermoplastic elastomer) refers to a polymer compound which softens and flows with increased temperature, and becomes relatively hard and strong in the case of being cooled. In the present specification, a polymer compound which softens and flows with increased temperature, becomes relatively hard and strong in the case of being cooled, and has a rubber-like elasticity, is defined as a thermoplastic elastomer, which is distinguished from a polymer compound which softens and flows with increased temperature, becomes relatively hard and strong in the case of being cooled, and has no rubber-like elasticity, defined as a non-elastomer thermoplastic resin.

The thermosetting resin refers to a polymer compound which is cured to form a three-dimensional network structure with increased temperature.

Examples of the thermoplastic resin include a polyurethane resin, a polyolefin resin, a polyvinyl chloride resin, and a polyamide resin. Examples of the thermoplastic resin include a thermoplastic polyolefin elastomer (TPO), a thermoplastic polystyrene elastomer (TPS), a thermoplastic polyamide elastomer (TPA), a thermoplastic polyurethane elastomer (TPU), a thermoplastic polyester elastomer (TPC), and a thermoplastic vulcanizate (TPV).

For example, as the thermoplastic material, a thermoplastic material having a temperature of deflection under load (loading 0.45 MPa) defined by ISO 75-2 or ASTM D648 of 78°C or more, a tensile strength at yield defined by JIS K7113 of 10 MPa or more; a tensile strength at break defined by JIS K7113 of 50% or more; and a Vicat softening temperature defined by JIS K7206 (method A) of 130°C or more can be used.

Examples of the thermosetting resin include a phenol resin, a urea resin, a melamine resin, an epoxy resin, and a polyamide resin.

Among these, from the viewpoint of adhesiveness with the organic fiber, a thermoplastic resin is preferably used; a thermoplastic polyamide resin or a thermoplastic polyurethane resin is more preferably used; and a thermoplastic polyamide elastomer (TPA) is still more preferably used.

Other than the thermoplastic resin (including a thermoplastic elastomer) and thermosetting resin described above, a general-use resin such as a (meth)acrylic resin, an EVA resin, a vinyl chloride resin, a fluorine resin, or a silicone resin may also be used as the resin material.

In a case in which the thermoplastic polyamide resin is used as the resin material, the modulus of elasticity (modulus of elasticity in tension of elasticity as defined in JIS K7113: 1995) of the thermoplastic polyamide resin material is preferably set within a range of from 0.1 times to 10 times the modulus of elasticity of the thermoplastic resin for forming a tire frame member. In a case in which the modulus of elasticity of the thermoplastic polyamide resin material is not more than 10 times the modulus of elasticity of the thermoplastic polyamide resin material for forming the tire frame member, the crown portion does not become too hard, facilitating the rim assembling. In a case in which the modulus of elasticity of the thermoplastic polyamide resin material is 0.1 times or more the modulus of elasticity of the thermoplastic resin material for forming the tire frame member, a resin constituting the reinforcing layer is not too soft, the in-plane shear stiffness of the belt is high, and cornering power is improved.

In a case in which the thermoplastic polyamide resin material is included in the resin material, from the viewpoint of increasing pull-out property (difficulty to pull out) of the organic fiber, the surface of the organic fiber is preferably coated with the thermoplastic polyamide resin material by 20% or more, and more preferably by 50% or more. The content of the thermoplastic polyamide resin material included in the reinforcing layer is preferably 20% by mass or more, and more preferably 50% by mass or more, from the viewpoint of increasing pull-out property of the organic fiber with respect to the total amount of the materials constituting the reinforcing layer excluding the organic fiber.

In order to configure the reinforcing layer to include the resin material, for example, the reinforcing layer can be formed by configuring such that at least a part of the organic fiber is embedded in the outer circumference of the tire frame member formed of the thermoplastic polyamide resin material in a cross sectional view along the axial direction of the tire frame member. In this case, the resin material including the thermoplastic polyamide resin at the outer circumference of the tire frame member with which the organic fiber is coated corresponds to the resin material constituting the reinforcing layer, and the reinforcing layer is constituted by the thermoplastic polyamide resin material forming the tire frame member and the organic fiber.

### Exemplary Method of Producing for Reinforcing Layer

The reinforcing layer can be produced, for example, by a method having the following steps (1) to (3):
(1) an undercoating treatment step of applying a first composition including at least one of an epoxy compound or an isocyanate compound to the surface of a cord member including at least one of an aramid fiber material or a polyester fiber material, to form an undercoat layer;
(2) an RF treatment step of applying a second composition including a resorcinol-formaldehyde resin to the surface of the undercoat layer after the undercoating treatment step, and thereafter heating the second composition to from 160°C to 180°C to form an adhesive layer (RF layer), thereby obtaining an organic fiber; and
(3) a resin coating treatment step of juxtaposing the plural organic fibers at desired intervals on a tire frame member after the RF treatment step, applying a resin material to the surface of the adhesive layer (RF layer) on which the organic fibers are juxtaposed, and thereafter heating the resin material to form a reinforcing layer.

In the undercoating treatment step, the first composition including at least one of the epoxy compound and the isocyanate compound is applied to the surface of the cord member including at least one of the aramid fiber material or the polyester fiber material. The first composition may be applied to the surface of the cord member, followed by heating at a predetermined temperature for a predetermined time, to form the undercoat layer, or the undercoat layer and the RF layer may be simultaneously formed by applying the second composition, followed by heating. From the viewpoint of adhesiveness to the cord member, a drying step of drying the coating film immediately after application of the first composition may be provided, and a baking step of baking after the drying step may be provided. By providing the drying step, the solvent in the first composition can be sufficiently removed, which can provide the subsequent efficient baking step. In the drying step, the temperature and drying time are set if appropriate, but it is preferable to dry at from 150°C to 200°C for from 60 seconds to 100 seconds, and more preferable to dry at from 160°C to 180°C for from 70 seconds to 90 seconds. In the baking step, it is preferable to bake at, for example, from 220°C to 280°C for from 40 seconds to 80 seconds, and more preferable to bake at from 230°C to 260°C for from 50 seconds to 70 seconds.

A known method such as coating, dipping, or extrusion molding can be used if appropriate as the method of applying the first composition to the cord member. For example, the undercoat layer can be efficiently formed by impregnating the cord member with the first composition and baking after drying as described above.

In the RF treatment step, the second composition including the resorcinol-formaldehyde condensate is applied to the surface of the undercoat layer obtained in the undercoat step, and heated at a temperature of from 160°C to 180°C, to form the RF layer.

In the RF treatment step, from the viewpoint of further enhancing the adhesiveness between the RF layer and the undercoat layer, the drying step of drying the coating film of the second composition may be provided, and the baking step of baking the coating film of the second composition may be then provided. By providing the drying step, the solvent in the second composition can be sufficiently removed, which can provide the subsequent efficient baking step. In the RF treatment step, in a case in which the drying step and the baking step are performed, the heating temperature is preferably in the range of from 160°C to 180°C in both the steps. In the drying step, for example, it is preferable to dry at from 160°C to 180°C for from 70 seconds to 90 seconds. In the baking step, for example, it is preferable to bake at from 160°C to 170°C for from 50 seconds to 70 seconds.

A known method such as coating, dipping, or extrusion molding can be used if appropriate as the method of applying the second composition. For example, the cord member having the undercoat layer formed thereon is impregnated with the second composition and baked after drying as described above, whereby the RF layer can be efficiently formed.

In the resin coating treatment step, by coating the cord member (that is, the organic fiber) on which the undercoat layer and the RF layer obtained in the RF treatment step after the undercoat treatment are formed with the resin, and heating at a predetermined temperature for a predetermined time, the reinforcing layer in which the organic fiber is coated with the resin material can be produced. The heating temperature in the resin coating treatment step is preferably adjusted if appropriate depending on the resin material to be used. For example, in a case in which the thermoplastic polyamide resin is used as the resin material, the heating temperature is preferably from 220°C to 280°C. A method of coating the organic fiber with the resin material is not particularly limited. For example, the organic fiber is placed in a general laminator (coating apparatus), extruded at a resin extrusion temperature of from 220°C to 280°C, and laminated at a laminator press temperature of from 200°C to 250°C, whereby the reinforcing layer in which the organic fiber is coated with the resin material can be produced.

Hereinbelow, specific embodiments according to the present disclosure are described with reference to the drawings. However, the present disclosure is not limited to these embodiments.

In the drawings, the arrow C direction indicates the tire circumferential direction, the arrow R direction indicates the tire radial direction, and the arrow W direction indicates the tire width direction. The tire radial direction means a direction orthogonal to the tire axis (not shown). The tire width direction means a direction parallel to the tire rotation axis. The tire width direction can also be referred to as the tire axial direction.

Dimensions of each part are measured by the method described in the 2013 version YEAR BOOK issued by JATMA (Japan Automobile Tire Association).

### First Embodiment

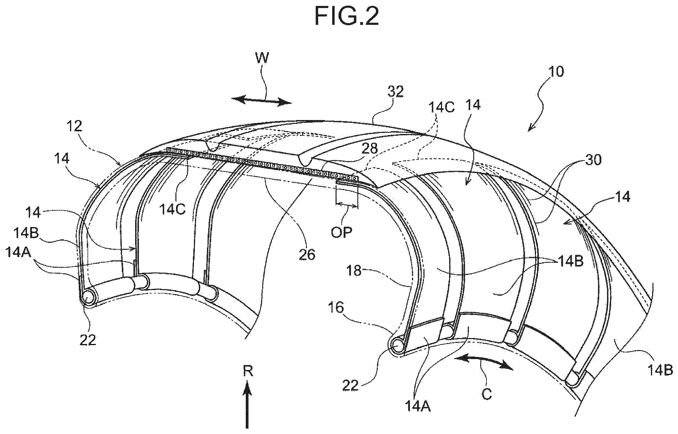

Subsequently, a specific embodiment of a tire of the present disclosure is described below with reference to the drawings. In Fig. 2, a tire 10 according to the present embodiment includes a tire frame member 12 and a reinforcing layer 14.

The tire frame member 12 is made of a resin and includes a bead portion 16, a side portion 18 positioned on a tire radial direction outer side of the bead portion 16, and a crown portion 26 positioned on a tire width direction inner side of the side portion 18. A tread 32 is disposed on the crown portion 26. Here, the bead portion 16 means a range from the tire radial direction inner side end of the tire frame member 12 to 30% of the cross-sectional height of the tire frame member 12. The tire frame member 12 has an annular shape about a tire axis. Examples of the resin included in the tire frame member 12 include a thermoplastic resin (including a thermoplastic elastomer), a thermosetting resin, and other general-use resins, as well as an engineering plastic (including a super engineering plastic). Vulcanized rubber is not included in the resin here.

Examples of the resin used in the first embodiment include a thermoplastic resin (including a thermoplastic elastomer) and a thermosetting resin, and their definitions are the same as described above.

Examples of the thermoplastic resin (including a thermoplastic elastomer) used for the tire frame member 12 include a thermoplastic polyolefin elastomer (TPO), a thermoplastic polystyrene elastomer (TPS), a thermoplastic polyamide elastomer (TPA), a thermoplastic polyurethane elastomer (TPU), a thermoplastic polyester elastomer (TPC), a dynamically thermoplastic vulcanizate (TPV), a thermoplastic polyolefin resin, a thermoplastic polystyrene resin, a thermoplastic polyamide resin, and a thermoplastic polyester resin.

For example, as the thermoplastic material, a thermoplastic material having a temperature of deflection under load (loading 0.45 MPa) defined by ISO 75-2 or ASTM D648 of 78°C or more, a tensile strength at yield defined by JIS K7113 of 10 MPa or more; a tensile strength at break defined by JIS K7113 of 50% or more; and a Vicat softening temperature defined by JIS K7206 (method A) of 130°C or more can be used.

Examples of the thermosetting resin include a phenol resin, an epoxy resin, melamine resin, and a urea resin.

Other than the thermoplastic resin (including a thermoplastic elastomer) and the thermosetting resin, a general-use resin such as a (meth)acrylic resin, an EVA resin, a vinyl chloride resin, a fluorine resin, or a silicone resin may also be used as the resin material.

A bead core 22 is embedded in the bead portion 16. The thermoplastic material included in the bead core 22 is preferably an olefin type TPE, ester type TPE, amide type TPE, or urethane type TPE, or a TPV which is a mixed, partly rubber-based resin. The thermoplastic material preferably has, for example, a temperature of deflection under load (loading 0.45 MPa) defined by ISO 75-2 or ASTM D648 of 75°C or more, a tensile strength at yield by JIS K7113 of 10% or more; a tensile strength at break defined by JIS K7113 of 50% or more; and a Vicat softening temperature defined by JIS K7113 (method A) of 130°C or more.

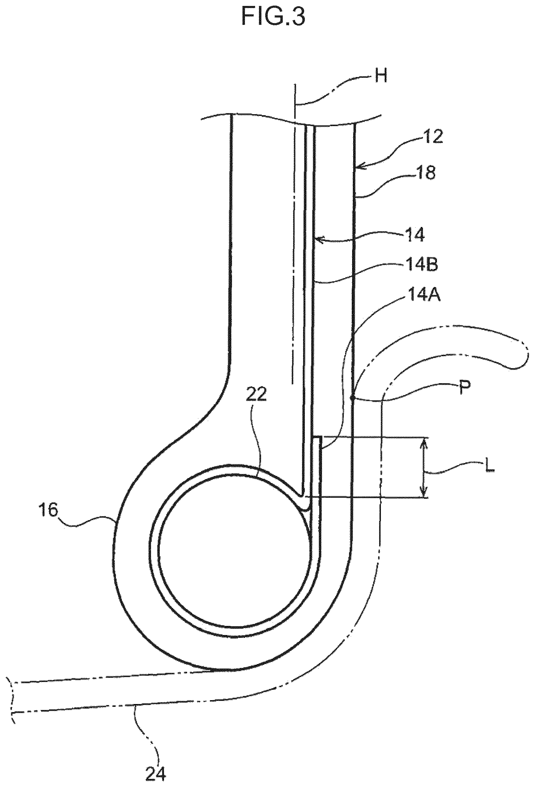

As shown in Fig. 3, the bead core 22 has an annular shape, and is made of a thermoplastic material having a higher modulus of elasticity than that of the resin material of the tire frame member 12. The modulus of elasticity of the bead core 22 is preferably 1.5 times or more, and more preferably 2.5 times or more, of the modulus of elasticity of the tire frame member 12. In a case in which the modulus of elasticity of 1.5 times or less and the tire 10 is assembled to a rim 24 and filled with air to raise the internal pressure, the bead portion 16 is lifted to a tire radial direction outer side, whereby the bead portion 16 may be detached from the rim 24. The bead core 22 may be formed by insert molding (injection molding) or the like using a hard resin, and a method of forming the bead core 22 is not particularly limited.

As shown in Fig. 3, the bead core 22 has, for example, a circular cross section. The bead core 22 may have a wave shape so that the radius of the bead core varies depending on a position in a tire circumferential direction. In this case, the bead core 22 itself can be stretched to some extent, which facilitates rim assembly. The bead core 22 is not limited to a resin (thermoplastic material), and may be formed by stacking resin-coated steel cords in a spiral shape in the tire circumferential direction.

In the tire frame member 12, the crown portion 26 is connected to the tire radial direction outer side of the side portion 18. On the outer circumference surface of the crown portion 26, a belt layer 28 is provided. The belt layer 28 is configured by winding a resin-coated cord in a spiral shape in the tire circumferential direction, for example.

A tread 32 is provided on the tire radial direction outer side of the crown portion 26 and the belt layer 28. The tread 32 is, for example, a pre-cured tread (PCT) formed using rubber. The tread 32 is formed from rubber having more excellent abrasion resistance than that of the resin material for forming the tire frame member 12. The same types of tread rubber used for conventional rubber-made pneumatic tires, for example, styrene-butadiene rubber (SBR) may be used as the rubber. Other type of resin material having more excellent abrasion resistance than that of the resin material forming the tire frame member 12 may be used as the tread 32.

In the reinforcing layer 14, an organic fiber 30 is coated with a resin material. The reinforcing layer 14 extends from the bead portion 16 to the side portion 18. The reinforcing layers 14 are disposed side by side at intervals in the tire circumferential direction. The reinforcing layer 14 is formed to be longer in a tire radial direction than in the tire circumferential direction in a state where it is extended in a plane. For example, the same resin material as the resin material included in the tire frame member 12 is used as the resin material. One surface, or both surfaces of the organic fiber 30 may be coated with the resin material. In a case in which both the surfaces of the organic fiber 30 are coated with the resin material, the organic fiber 30 can be disposed at the thickness direction center of the reinforcing layer 14. In a case in which both surfaces are coated, different resin materials may be used for one surface and the other surface.

The organic fiber 30 is configured so as to include three constituent elements: a cord member including at least one of an aramid fiber material or a polyester fiber material; an undercoat layer provided on the cord member and formed from a first composition including at least one of an epoxy compound or an isocyanate compound; and an adhesive layer (RF layer) provided on the undercoat layer and formed from a second composition including a resorcinol-formaldehyde resin. In the reinforcing layer 14, the organic fiber 30 extends at least along the tire radial direction. An organic fiber 30 extending in the tire circumferential direction may be combined with the organic fiber 30 so that the organic fibers 30 are overlapped with each other so as to cross each other. In this case, the organic fibers 30 may be woven or knitted to form a cloth shape. Note that the organic fiber 30 may be inclined with respect to the tire radial direction and the tire circumferential direction.

As shown in Fig. 3, the tire radial direction inner side end 14A of the reinforcing layer 14 is positioned on the tire radial direction inner side with respect to a rim separation point P of the bead portion 16. The term "rim separation point P" as used herein refers to a point where a tire separates from a rim flange in a prescribed inner pressure non-load state in a case in which the tire is mounted on a rim as described in the 2013 version YEAR BOOK issued by JATMA (Japan Automobile Tire Association) according to the dimension of the tire. Specifically, the reinforcing layer 14 is fastened to the bead core 22 embedded in the bead portion 16. Specifically, the tire radial direction inner side end 14A of the reinforcing layer 14 is wound around the bead core 22, for example, so as to go around the bead core 22, is folded back from the inside of the tire to the outside, and is joined to the reinforcing layer 14 itself. As joining means, hot air welding or thermocompression bonding using a hot plate is preferable. Sewing may be used as other joining means. A joining length L is 3 mm or more, more preferably 5 mm or more, and still more preferably 15 mm or more. The tire radial direction inner side end 14A of the reinforcing layer 14 may be wound (folded back) from the outside of the tire to the inside.

As shown in Fig. 2, a tire radial direction outer side end 14C of the reinforcing layer 14 extends from the bead portion 16 of the tire frame member 12 through the side portion 18 to the crown portion 26, and is overlapped with the belt layer 28. The overlapping OP with the belt layer 28 is preferably 5 mm or more from an end portion of the belt layer 28 to a tire width direction center side. The reinforcing layer 14 may extend to the tire width direction center. The position of the tire radial direction outer side end 14C of the reinforcing layer 14 may be terminated in the vicinity of the maximum width position of the tire in the side portion 18, or may be terminated just before reaching the crown portion 26 (so-called buttress portion).

As shown in Fig. 3, an outer surface 14B of the reinforcing layer 14 is positioned on a tire outer side with respect to the half of the thickness of the tire frame member 12 (the position of the line H). In other words, the outer surface 14B of the reinforcing layer 14 is positioned on the outer surface side of the tire frame member 12. The reinforcing layer 14 may be exposed on the outer surface of the tire frame member 12.

The position of the outer surface 14B of the reinforcing layer 14 is not limited thereto. For example, the outer surface 14B may be positioned at the half of the thickness of the tire frame member 12 (the position of the line H), or may be positioned on the tire inner side with respect to the half of the thickness of the tire frame member 12.

### Effects

The tire 10 according to the present embodiment includes at least the tire frame member 12 made of resin and the reinforcing layer 14. The tire frame member 12 includes the bead portion 16, the side portion 18 positioned on the tire radial direction outer side of the bead portion, and the crown portion 26 positioned on the tire width direction inner side of the side portion. The tread is disposed on the crown portion 26. The reinforcing layers 14, in which the organic fiber is coated with the resin material, extend from the bead portion 16 to the side portion 18, and are disposed side by side in the tire circumferential direction. Hereinbelow, the effects are described.

In Fig. 2, in the tire 10 according to the present embodiment, the reinforcing layer 14 is provided at least at the side portion 18 of the tire frame member 12. That is, the tire frame member 12 is provided with the reinforcing layer extending from the bead portion to the side portion, whereby the propagation speed of scratches on the tire frame member 12 can be reduced. The reinforcing layers 14 are arranged in the tire circumferential direction, and are not in a form that is integrally continuous in the tire circumferential direction, so that the rigidity in the tire circumferential direction does not become too high, which provides good balance with the rigidity in the tire radial direction. Therefore, cut resistance performance can be improved while considering the balance between the rigidity in the tire circumferential direction and the rigidity in the tire radial direction of the tire.

The outer surface 14B of the reinforcing layer 14 is positioned on the tire outer side with respect to the half of the thickness of the tire frame member 12. That is, the outer surface 14B of the reinforcing layer 14 is positioned on the outer surface side of the tire frame member 12, so that durability with respect to bending deformation of the tire is improved.

Furthermore, the tire radial direction inner side end 14A of the reinforcing layer 14 is positioned on the tire radial direction inner side with respect to the rim separation point P of the bead portion 16, so that pinch cut can be suppressed in a case in which a vehicle runs on a curb or the like, for example.

The reinforcing layer 14 is engaged with the bead core 22 embedded in the bead portion 16, and wound with the bead core 22, so that the reinforcing layer 14 can bear most of a tensile force occurring in the tire. Therefore, resistance with respect to internal pressure is remarkably improved. As a result of which the thickness of the tire frame member 12 can be reduced, and ride comfort can be improved.

As described above, the tire 10 according to the present embodiment, the cut resistance performance can be improved while considering the balance between the rigidity in the tire circumferential direction and the rigidity in the tire radial direction, and thus the ride comfort can be improved.

In the tire 10, by configuring the organic fiber of the reinforcing layer 14 disposed at the side portion so as to include three layers of the cord member, the undercoat layer, and the adhesive layer (RF layer), the organic layer can be strongly adhered to not only the reinforcing layer 14 but also the tire frame member 12.

### Second Embodiment

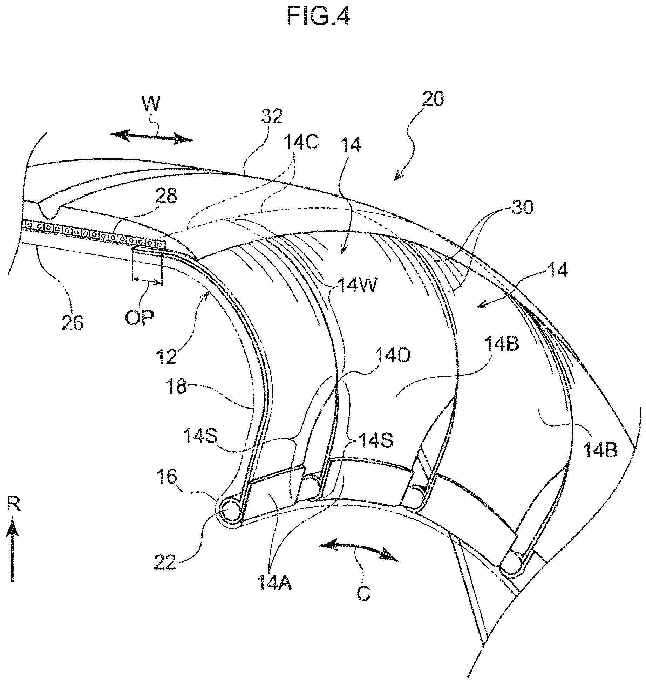

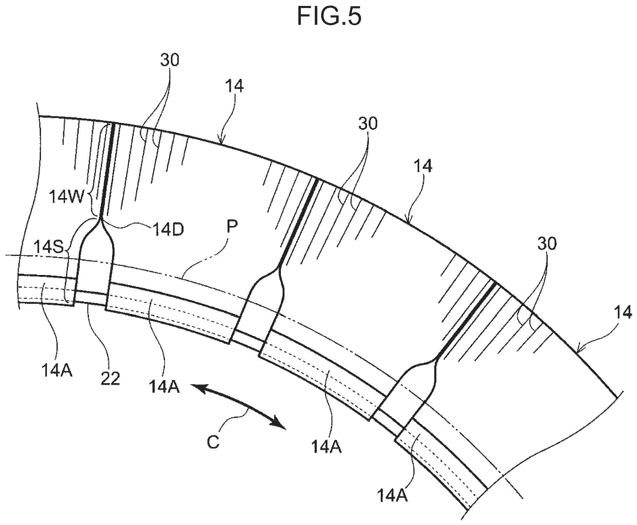

In Figs. 4 and 5, in a tire 20 according to the present embodiment, reinforcing layers 14 which are adjacent to each other in a tire circumferential direction come into contact with each other. The reinforcing layer 14 comes into contact with each other at least a portion including the maximum width position of a tire. The contacting includes a case in which end surfaces of the reinforcing layer 14 come into contact with each other in the tire circumferential direction, and a case in which the end surfaces of the reinforcing layer 14 are overlapped with each other in the tire radial direction.

In the reinforcing layer 14, a wide portion 14W located on a tire radial direction outer side and a narrow portion 14S located on a tire radial direction inner side are formed. The wide portion 14W includes the tire maximum width position of a side portion 18. The wide portions 14W come into contact with each other. The narrow portions 14S are separated from each other in the tire circumferential direction.

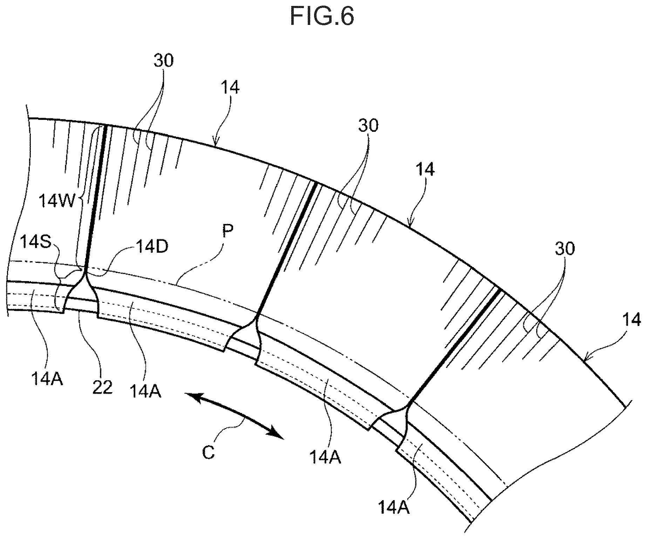

In the example shown in Fig. 5, a boundary 14D between the wide portion 14W and the narrow portion 14S is positioned on a slight tire radial direction inner side with respect to the maximum width position of the tire. The position of the boundary 14D is not limited thereto, and the boundary 14D may be positioned on a further tire radial direction inner side as shown in Fig. 6. That is, in the example shown in Fig. 6, the boundary 14D is positioned on the tire radial direction inner side with respect to a rim separation point P of a bead portion 16. As a result of which, pinch cut can be suppressed in a case in which a vehicle runs on a curb or the like.

According to the tire 20 of the present embodiment, the reinforcing layers 14 are disposed so as to be in contact with each other in the tire circumferential direction, so that cut resistance performance can be further improved.

The other parts are the same as those in the first embodiment, so that the same elements are denoted by the same reference numerals in the drawings, and the description thereof is omitted.

### Third Embodiment

Other reinforcing layers (not shown) may be disposed between reinforcing layers 14 according to the first embodiment which are adjacent to each other in a tire circumferential direction. In this case, the other reinforcing layers and the reinforcing layers 14 may be partially overlapped with each other. Configuration may also be such that one tire circumferential direction side of the other reinforcing layer is partially overlapped with the adjacent reinforcing layer 14, and the other tire circumferential direction side is provided with a gap of 0.1 mm or greater, for example, without being overlapped with the adjacent reinforcing layer 14. In the second embodiment, the reinforcing layers 14 which are adjacent to each other in the tire circumferential direction may be partially overlapped with each other.

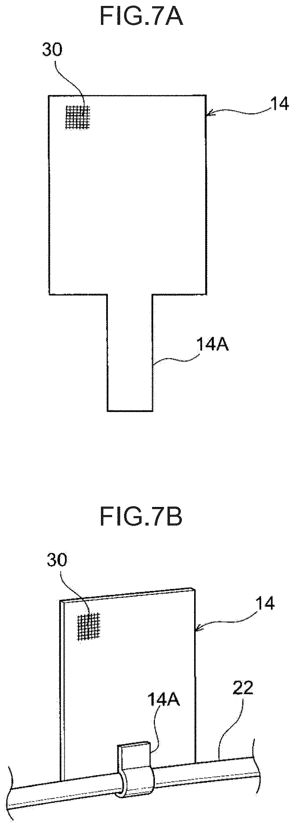

As shown in Figs. 7A and 7B, configuration may also be such that the width of a tire radial direction inner side end 14A of the reinforcing layer 14 is narrowly formed, and the tire radial direction inner side end 14A is wound around a bead core 22 and folded back. As a result, the curvature of the bead core 22 can suppress the occurrence of wrinkles in the reinforcing layer 14.

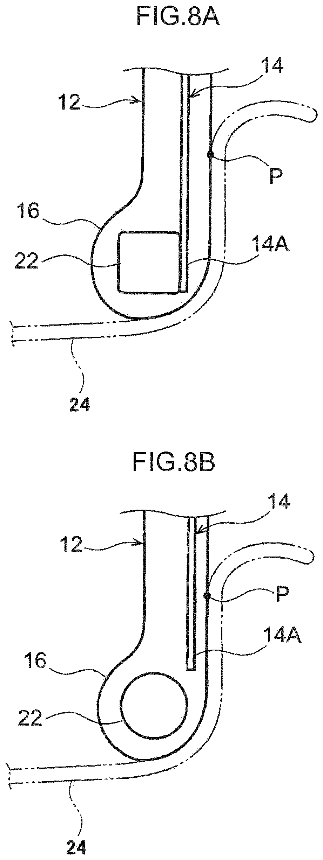

As shown in Fig. 8A, the tire radial direction inner side end 14A of the reinforcing layer 14 may be fastened to the side of the bead core 22 by adhesion or the like. In this case, it is preferable that the bead core 22 has a polygonal cross section. As shown in Fig. 8B, the tire radial direction inner side end 14A of the reinforcing layer 14 may be separated from the bead core 22. In this case, it is preferable that the tire radial direction inner side end 14A of the reinforcing layer 14 is positioned on a tire radial direction inner side with respect to a rim separation point P of a bead portion 16. In a case in which plural bead cores 22 are provided on one bead portion 16, the tire radial direction inner side end 14A of the reinforcing layer 14 may be sandwiched by the two bead cores 22.

### Fourth Embodiment

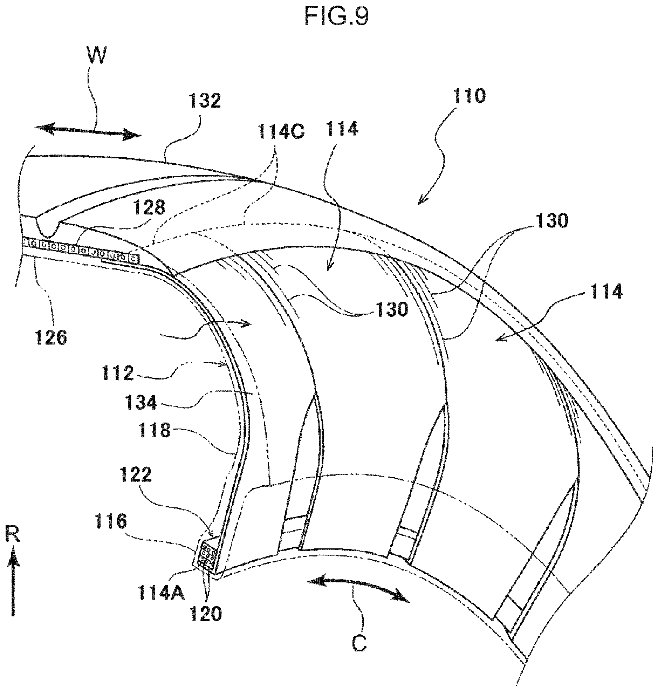

In Fig. 9, a tire 110 according to the present embodiment includes a tire frame member 112 and a reinforcing layer 114.

The tire frame member 112 is made of a resin and includes a bead portion 116, a side portion 118 positioned on a tire radial direction outer side of the bead portion 116, and a crown portion 126 positioned on a tire width direction inner side of the side portion 118. A tread 132 is disposed on the crown portion 126. Here, the bead portion 116 means a range from the tire radial direction inner side end of the tire frame member 112 to 30% of the cross-sectional height of the tire frame member 112. The tire frame member 112 has an annular shape about a tire axis. Examples of the resin included in the tire frame member 112 include a thermoplastic resin (including a thermoplastic elastomer), a thermosetting resin, and other general-use resins, as well as an engineering plastic (including a super engineering plastic). Vulcanized rubber is not included in the resin here.

The thermoplastic resin (including a thermoplastic elastomer) referred to herein refers to the same polymer compound as that defined in the first embodiment, and examples of the thermoplastic resin (including a thermoplastic elastomer) include the same resins as the resins or the like mentioned in the first embodiment. Furthermore, as the thermoplastic resin, for example, there can be used thermoplastic resins having the same temperature of deflection under load, tensile strength at yield, tensile strength at break, and Vicat softening temperature as those of the thermoplastic resins mentioned in the first embodiment.

The thermosetting resin refers to the same polymer compound as that defined in the first embodiment, and examples of the thermosetting resin include the same resins as those mentioned in the first embodiment. Furthermore, other resin materials which can be used are also the same as those described in the first embodiment.

An annular-shaped bead core 122 formed from resin-coated cords 120 is embedded in the bead portion 116. The material of the cord 120 may be steel, an organic fiber, a resin, or the like. The bead core 122 is, for example, a strand bead formed by stacking plural (for example, three) resin-coated cords 120 on each other while winding the plural resin-coated cords 120 in the tire circumferential direction. In the cross section of the strand bead in the tire width direction, plural resin-coated cords 120 are arranged. For example, three layers of cords 120 are stacked on each other.

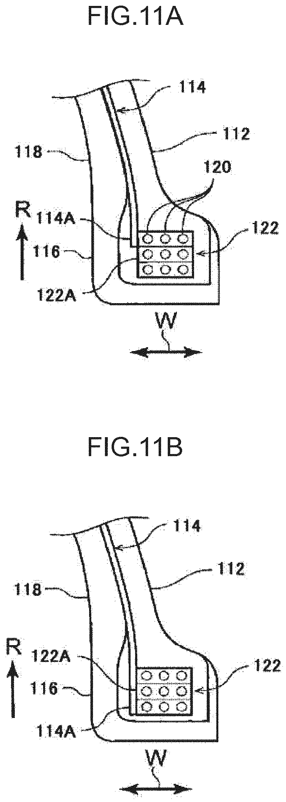

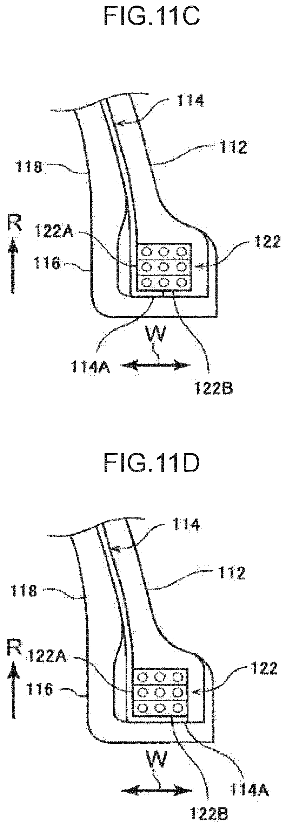

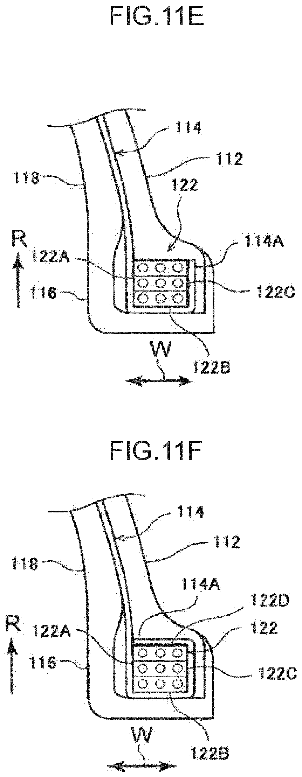

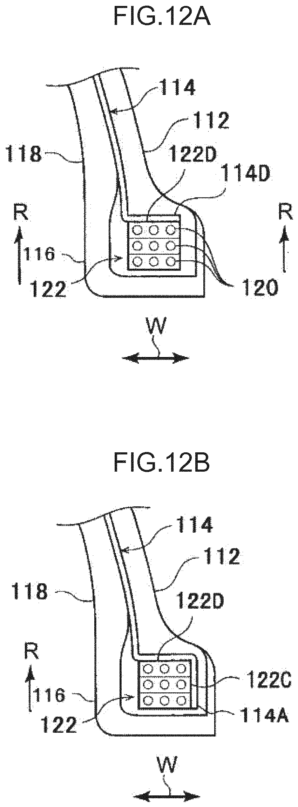

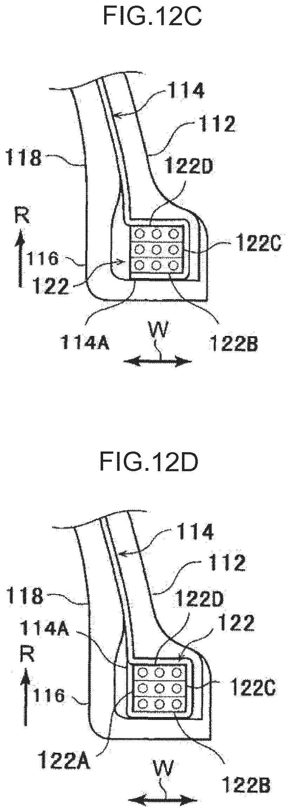

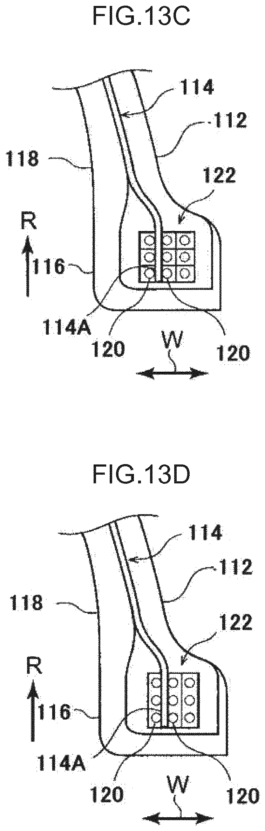

The stacked direction of the cords 120 may be the tire radial direction as shown in Figs. 11 and 12, may be the tire width direction as shown in Fig. 13D, or may be other direction. As shown in Fig. 13C, the bead core 122 may be a mono-strand bead formed by stacking a single resin-coated cord 120 in the tire width direction and the tire radial direction while winding the cord 120 in the tire circumferential direction. The number of stacked layers is not limited to three. Furthermore, as long as the cord 120 is coated with a resin, the method of forming the bead core 122 is not particularly limited, and the bead core 122 is not necessarily a strand bead.

The resin material with which the cord 120 is coated is preferably an olefin type TPE, ester type TPE, amide type TPE, or urethane type TPE, or a TPV which is a mixed, partly rubber-based resin. The thermoplastic material preferably has, for example, a temperature of deflection under load (loading 0.45 MPa) defined by ISO 75-2 or ASTM D648 of 75°C or more, a tensile strength at yield by JIS K7113 of 10% or more; a tensile strength at break defined by JIS K7113 of 50% or more; and a Vicat softening temperature defined by JIS K7113 (method A) of 130°C or more.

In the tire frame member 112, the crown portion 126 is connected to the tire radial direction outer side of the side portion 118. On the outer circumference surface of the crown portion 126, a belt layer 128 is provided. The belt layer 128 is configured by winding a resin-coated cord in a spiral shape in the tire circumferential direction, for example.

A tread 132 is provided on the tire radial direction outer side of the crown portion 126 and the belt layer 128. The tread 132 is formed from rubber having more excellent abrasion resistance than that of the resin material for forming the tire frame member 112. The same types of tread rubber used for conventional rubber-made pneumatic tires, for example, styrene-butadiene rubber (SBR) may be used as the rubber. Other type of resin material having more excellent abrasion resistance than that of the resin material forming the tire frame member 112 may be used as the tread 132.

In the reinforcing layer 114, an organic fiber 130 is coated with a resin material. The reinforcing layer 114 is thermally welded to the bead core 122. Thermal welding refers to using heat to melt and join the resin material of the reinforcing layer 114 and the resin material of the bead core 122. The reinforcing layer 114 is thermally welded to the bead core 122.

For example, the same resin material as the resin material included in the tire frame member 112 is used as the resin material with which the organic fiber 130 is coated. One surface, or both surfaces of the organic fiber 130 may be coated with the resin material. In a case in which both the surfaces of the organic fiber 130 are coated with the resin material, the organic fiber 130 can be disposed at the thickness direction center of the reinforcing layer 114. In a case in which both surfaces are coated, different resin materials may be used for one surface and the other surface.

The organic fiber 130 is configured so as to include three constituent elements: a cord member including at least one of an aramid fiber material or a polyester fiber material; an undercoat layer provided on the cord member and formed from a first composition including at least one of an epoxy compound or an isocyanate compound; and an adhesive layer provided on the undercoat layer and formed from a second composition including a resorcinol-formaldehyde resin. In the reinforcing layer 114, the organic fiber 130 extends at least along the tire radial direction. An organic fiber 130 extending in the tire circumferential direction may be combined with the organic fiber 130 so that the organic fibers 130 are overlapped with each other so as to cross each other. In this case, the organic fibers 130 may be woven or knitted to form a cloth shape. Note that the organic fiber 130 may be inclined with respect to the tire radial direction and the tire circumferential direction.

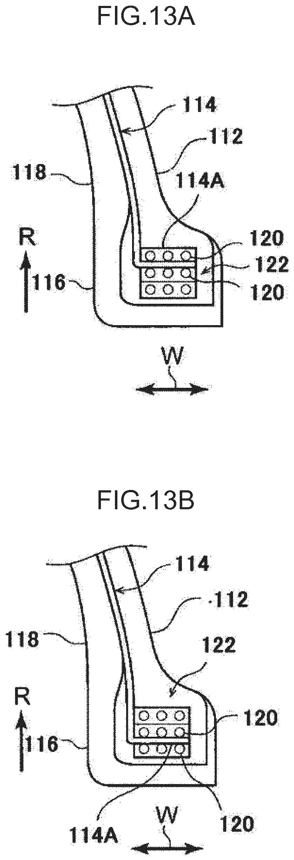

As shown in Figs. 11 to 13, various variations are conceivable as modes of joining the reinforcing layer 114 to the bead core 122. Here, the bead core 122 shown in each of Figs. 11 and 12 is a strand bead of three layers stacked on each other in the tire radial direction. The bead core 122 shown in Fig. 13A, Fig. 13B, and Fig. 13D is a strand bead of three layers stacked on each other in the tire width direction. The bead core 122 shown in Fig. 13C is a mono-strand bead stacked in three layers in both the tire radial direction and the tire width direction.

In the example shown in Fig. 11A, the reinforcing layer 114 is joined to a part of a tire width direction outer side surface 122A of the bead core 122. This part is a layer positioned on the outermost side in the tire radial direction among the three layers included in the bead core 122.

In the example shown in Fig. 11B, the reinforcing layer 114 is broadly joined to the tire width direction outer side surface 122A of the bead core 122.

In the example shown in Fig. 11C, the reinforcing layer 114 is bent into a substantially L shape so as to run along the tire width direction outer side surface 122A and a tire radial direction inner side surface 122B of the bead core 122, and is joined thereto across the surface from the tire width direction outer side surface 122A to the tire width direction center of the tire radial direction inner side surface 122B.

In the example shown in Fig. 11D, the reinforcing layer 114 is broadly joined to the bead core 122 from the tire width direction outer side surface 122A to the tire radial direction inner side surface 122B.

In the example shown in Fig. 11E, the reinforcing layer 114 is bent into a substantially U shape so as to run along the tire width direction outer side surface 122A, the tire radial direction inner side surface 122B, and a tire width direction inner side surface 122C of the bead core 122, and is broadly joined to the bead core 122 from the tire width direction outer side surface 122A to the tire radial direction inner side surface 122B and the tire width direction inner side surface 122C.

In the example shown in Fig. 11F, the reinforcing layer 114 surrounds the circumference of the bead core 122. The reinforcing layer 114 is bent so as to surround the bead core 122, and is broadly joined to the tire width direction outer side surface 122A, the tire radial direction inner side surface 122B, the tire width direction inner side surface 122C, and a tire radial direction outer side surface 122D.

In the example shown in Fig. 12A, the reinforcing layer 114 is broadly joined to the tire radial direction outer side surface 122D of the bead core 122.

In the example shown in Fig. 12B, the reinforcing layer 114 is bent into a substantially L shape so as to run along the tire radial direction outer side surface 122D and the tire width direction inner side surface 122C of the bead core 122, and is broadly joined to the bead core 122 from the tire radial direction outer side surface 122D to the tire width direction inner side surface 122C.

In the example shown in Fig. 12C, the reinforcing layer 114 is bent into a substantially U shape so as to run along the tire radial direction outer side surface 122D, the tire width direction inner side surface 122C, and the tire radial direction inner side surface 122B, and is broadly joined to the bead core 122 from the tire radial direction outer side surface 122D to the tire width direction inner side surface 122C and the tire radial direction inner side surface 122B.

In the example shown in Fig. 12D, the reinforcing layer 114 surrounds the circumference of the bead core 122. The reinforcing layer 114 is bent so as to surround the bead core 122, and is broadly joined to the tire radial direction outer side surface 122D, the tire width direction inner side surface 122C, the tire radial direction inner side surface 122B, and the tire width direction outer side surface 122A.

In the example shown in Figs. 11 and 12, a bead core-side terminal end 114A of the reinforcing layer 114 is positioned around the bead core 122. This terminal end 114Ais thermally welded to the bead core 122. The terminal end 114A may be positioned around the bead core 122, and the terminal end 114A is not necessarily thermally welded to the bead core 122.

In the examples shown in Figs. 13A to 13D, the terminal end 114A of the reinforcing layer 114 on the bead core 122 side is positioned between the cords 120 of the bead core 122. This can be achieved by sandwiching the terminal end 114A of the reinforcing layer 114 between the cords 120 in a case in which the bead core 122 is manufactured by stacking the cords 120 on each other while winding the cords 120 in the tire circumferential direction.

In the example shown in Fig. 13A, the terminal end 114A of the reinforcing layer 114 is positioned between the layer positioned on the outermost side in the tire radial direction and the layer positioned at the tire radial direction center among the three layers configuring the bead core 122.

In the example shown in Fig. 13B, the terminal end 114A of the reinforcing layer 114 is positioned between the layer positioned on the innermost side in the tire radial direction and the layer positioned at the tire radial direction center among the three layers configuring the bead core 122.

In the example shown in Fig. 13C, the bead core 122 is a mono-strand bead, and the terminal end 114A of the reinforcing layer 114 is positioned between three pairs of cords 120 which are adjacent to each other in the tire width direction. In the example shown in Fig. 13D, the terminal end 114A of the reinforcing layer 114 is positioned between the layer positioned on the outermost side in the tire width direction and the layer positioned in the tire width direction center among the three layers configuring the bead core 122. The bead core 122 is a strand bead formed by stacking in the tire width direction. In Figs. 13C and 13D, the terminal end 114A of the reinforcing layer 114 is in a state inserted between the cords 120 of the bead core 122 from the tire radial direction outer side toward the inner side.

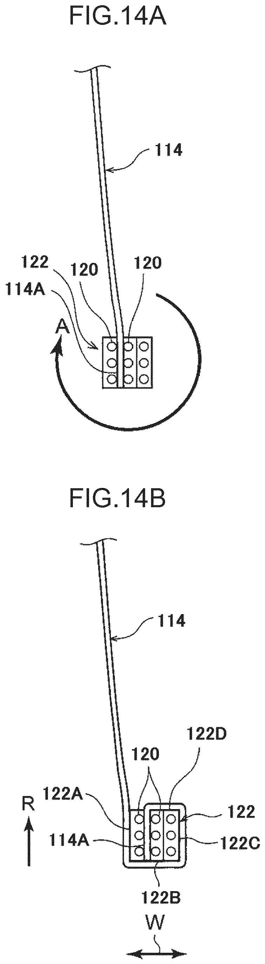

In addition thereto, as shown in Figs. 14A and 14B, after disposing the terminal end 114A of the reinforcing layer 114 between the cords 120 of the bead core 122, the reinforcing layer 114 may be integrally formed to the bead core 122 by thermal welding in a state where the reinforcing layer 114 is wound around the bead core 122, for example, in the direction of an arrow A. In this example, the reinforcing layer 114 is broadly joined to the surface of the tire width direction outer side surface 122A, the tire radial direction inner side surface 122B, and the tire width direction inner side surface 122C of the bead core 122, and joined to a part of the tire radial direction outer side surface 122D, and the terminal end 114A is positioned between the cords 120.

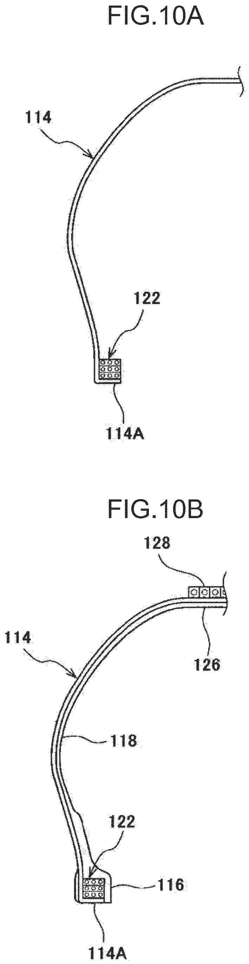

As shown in Fig. 10A, the reinforcing layer 114 is thermally welded and integrally formed to the bead core 122. In a case in which the terminal end 114A of the reinforcing layer 114 is positioned between the cords 120 of the bead core 122 (Figs. 13 and 14), the reinforcing layer 114 is integrally formed to the bead core 122 during manufacture of the bead core 122.

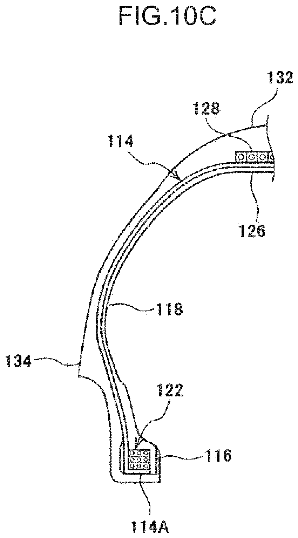

Here, the manufacturing process of the tire 110 is briefly described. First, the integrally-formed bead core 122 and the reinforcing layer 114 are disposed in a mold (not shown), and a resin material is supplied into a cavity inside the mold, thereby molding the tire frame member 112 made of a resin material integrally with the bead core 122 and the reinforcing layer 114 as shown in Fig. 10B. The reinforcing layer 114 is positioned on the outer surface of the tire frame member 112 from the side portion 118 to the crown portion 126. The belt layer 128 described above is provided on the outer circumference of the crown portion 126 of the tire frame member 112. As shown in Fig. 10C, a rubber layer 134 is formed on the outer side of the side portion 118 of the tire frame member 112 and around the bead portion 116, and a tread 132 is vulcanization molded to the tire radial direction outer side of the belt layer 128. As a result of which the tire 110 according to the present embodiment is obtained.

As shown in Fig. 9, the reinforcing layers 114 extend from the bead portion 116 to the side portion 118, and are disposed side by side in the tire circumferential direction. In this case, the reinforcing layers 114 which are adjacent to each other in the tire circumferential direction may be disposed in close contact with each other, or may be disposed with spacing in the tire circumferential direction.

For example, a tire radial direction outer side end 114C of the reinforcing layer 114 extends from the crown portion 126 of the tire frame member 112, and is overlapped with the belt layer 128. The overlapping with the belt layer 128 is preferably 5 mm or more from a tire width direction end portion of the belt layer 128 to a tire width direction center side. The reinforcing layer 114 may extend to the tire width direction center. The position of the tire radial direction outer side end 114C of the reinforcing layer 114 may be terminated in the vicinity of the maximum width position of the tire in the side portion 118, or may be terminated just before reaching the crown portion 126 (so-called buttress portion).

### Effects

The tire 110 according to the present embodiment includes: the tire frame member made of resin and including the bead portion, in which at least the bead core formed from the resin-coated cords is embedded, and the side portion positioned on the tire radial direction outer side of the bead portion; and the reinforcing layer in which the organic fiber is coated with the resin material, is thermally welded to the bead core, and extends from the bead portion to the side portion. The effects are described below.

In Fig. 9, in the tire 110 according to the present embodiment, the reinforcing layer 114 is provided at the outer surface of the tire frame member 112, specifically, from the bead portion 116 to the side portion 118 and further to the crown portion 126, whereby the propagation speed of scratches on the tire frame member 112 can be reduced. As a result of which the cut resistance performance of the tire 110 can be be improved. The reinforcing layers 114 are arranged in the tire circumferential direction, and are not in a form that is integrally continuous in the tire circumferential direction, so that the rigidity in the tire circumferential direction does not become too high, which provides good balance with the rigidity in the tire radial direction.

The outer surface of the reinforcing layer 114 is positioned on the outer surface of the tire frame member 112, so that the durability with respect to bending deformation of the tire 110 is improved. The reinforcing layer 114 is joined to the bead core 122, so that the reinforcing layer 114 can bear a tensile force occurring in the tire 110. Therefore, resistance with respect to internal pressure (pressure resistance) can be improved. As a result of which the thickness of the tire frame member 112 can be reduced, and ride comfort can be improved.

In Figs. 11 and 12, the bead core 122 is formed by coating the cord 120 with the resin, and the reinforcing layer 114 is thermally welded to the bead core 122, so that there is no need to provide a layer for bonding as compared with a case in which the reinforcing layer 114 is adhered to the bead core 122.

In particular, in the example shown in Figs. 11 and 12, the terminal end 114A of the reinforcing layer 114 on the bead core 122 side is positioned around the bead core 122, so that the manufacturing process is simpler than that for a structure in which the terminal end 114A is folded back at the bead core 122, and the length of the members included in the reinforcing layer 114 can be made shorter. As a result of which both the reinforcement and simplification of the tire frame member 112 can be achieved, as well as the weight of the tire 110 can be reduced.

In the example shown in Fig. 13, the terminal end 114A of the reinforcing layer 114 on the bead core 122 side is positioned between the cords 120 of the bead core 122. Furthermore, as shown in Figs. 13C and 13D, in a case in which the bead core is configured by the strand bead, the reinforcing layer 114 and the bead core 122 can be joined more strongly, so that the pressure resistance of the tire 110 can be further improved.

In the tire 110, the organic fiber of the reinforcing layer 114 disposed at the side portion is configured by three layers, that is, the cord member, the undercoat layer, and the adhesive layer, so that the organic layer can be strongly adhered to not only the reinforcing layer 114 but also the tire frame member 112.

As described above, according to the tire 110 of the present embodiment, due to the reinforcing layer 114 extending from the bead portion 116 to the side portion 118, both the pressure resistance and the cut resistance performance can be improved while reducing the weight of the tire 110.

### Fifth Embodiment

In the fourth embodiment, the reinforcing layers 114 are disposed side by side in the tire circumferential direction. However, the reinforcing layers 114 may be integrally formed. The reinforcing layers 114 which are adjacent to each other in the tire circumferential direction may be partially overlapped with each other. Furthermore, other reinforcing layers (not shown) may be disposed between the reinforcing layers 114 which are adjacent to each other in the tire circumferential direction. In this case, the other reinforcing layers and the reinforcing layers 114 may be partially overlapped with each other. Configuration may also be such that one tire circumferential direction side of the other reinforcing layer is partially overlapped with the adjacent reinforcing layer 114, and the other tire circumferential direction side is provided with a gap of 0.1 mm or greater, for example, without being overlapped with the adjacent reinforcing layer 114.

The tire according to the present disclosure includes the following aspects.
<1> A tire including:
   a tire frame member made of resin and including a bead portion and a side portion positioned on a tire radial direction outer side of the bead portion; and
   a reinforcing layer including an organic fiber and a resin material with which the organic fiber is coated,
   wherein the organic fiber includes: a cord member including at least one of an aramid fiber material or a polyester fiber material; an undercoat layer provided on the cord member and formed from a first composition including at least one of an epoxy compound or an isocyanate compound; and an adhesive layer provided on the undercoat layer and formed from a second composition including a resorcinol-formaldehyde resin, characterized in that the tire frame member made of resin excludes vulcanized rubber.
<2> The tire according to <1>, wherein the resin material included in the reinforcing layer includes a thermoplastic polyamide resin or a thermoplastic polyurethane resin.
<3> The tire according to <2>, wherein the thermoplastic polyamide resin is a thermoplastic polyamide elastomer.
<4> The tire according to any one of <1> to <3>, wherein the cord member is a single twisted multifilament obtained by twisting a plurality of monofilaments, or is obtained by twisting two or more of the multifilaments.
<5> The tire according to any one of <1> to <4>, wherein the reinforcing layer is disposed at the side portion.

### EXAMPLES

Hereinbelow, the present disclosure is further described by way of Examples, but the present disclosure is not limited to the following examples. Hereinbelow, a treatment of forming an undercoat layer on a cord member is referred to as an undercoating treatment; a treatment of forming an adhesive layer (RF layer) is referred to as an RF treatment; and a treatment of coating with a resin is referred to as a resin coating treatment.

### Cord Member

### Polyester Fiber

As the cord member, two yarn bundles of 1100 dtex which were multifilaments of a polyester fiber were twisted with 47 turns per 10 cm of a length to make a first twist and a second twist, thereby obtaining a cord member formed from a polyester fiber having a structure represented by 1670 dtex/2 and twist number of 47 × 47 (turn/10 cm).

### Aramid Fiber

As the cord member, two yarn bundles of 1670 dtex which were multifilaments of an aramid fiber were twisted with 47 turns per 10 cm of a length to make a first twist and a second twist, thereby obtaining a cord member formed from an aramid fiber having a structure represented by 1670 dtex/2 and twist number of 39 × 39 (turn/10 cm).

### First Composition

A first composition for forming an undercoat layer was prepared with a formulation shown in the following condition 1.

### Condition 1

- Sorbitol polyglycidyl ether (DENACOL EX-614B, manufactured by Nagase ChemteX Corporation): 7.8 parts by mass
- Copolymer of isobutylene and maleic anhydride (ISOBAM, manufactured by Kuraray Co., Ltd.): 60.7 parts by mass
- Aqueous solution of blocked isocyanate (BN-27, manufactured by Dai-ichi Kogyo Seiyaku Co., Ltd.): 41.5 parts by mass
- Water: 889.9 parts by mass

### Second Composition

A second composition for forming an adhesive layer was prepared with a formulation shown in the following condition 2.

### Condition 2

- Sodium hydroxide solution (10% by mass aqueous solution) (manufactured by Tosoh Corporation): 33.3 parts by mass
- Formaldehyde (37% by mass aqueous solution) (ISOBAM, manufactured by Nippon Kasei Chemical Co., Ltd.): 34.8 parts by mass
- Resorcinol (manufactured by Sumitomo Chemical Co., Ltd.): 27.1 parts by mass
- Water: 904.8 parts by mass

### Example 1

### Undercoating Treatment

The cord member formed from the polyester fiber prepared above was impregnated and coated with the first composition prepared above, using a general dipping treatment apparatus, and dried and baked at from 160°C to 180°C.

### RF Treatment

The cord member after the undercoating treatment was impregnated and coated with the second composition prepared above, and dried and baked at from 160°C to 180°C, thereby obtaining an organic fiber in which the cord member, the undercoat layer, and an RF adhesive layer were laminated in this order.

### Resin Coating Treatment

The organic fiber was placed in a general laminator (coating apparatus), and coated with a thermoplastic polyamide elastomer (TPA) as a resin material at a die temperature of 245°C during resin extrusion and a laminator press temperature of 230°C, thereby preparing a laminate plate having a width of 13 cm, a length of 100 mm, and a thickness of 0.8 mm, as a test piece 1. The test piece 1 includes 100 organic fibers at intervals of 1 mm only in a lateral row.

The preparation of a thermoplastic polyamide elastomer (TPA) is described below.

### Preparation of Thermoplastic Polyamide Elastomer (TPA)

The TPA was prepared by a treatment step including the following two-step polymerization reaction, i.e., polymerization reaction A and polymerization reaction B.

### Treatment Step A

43.7g of 1,2-aminododecanoic acid (manufactured by Aldrich), 601 g of aminododecanolactam (manufactured by Aldrich), and 15.5 g of adipic acid (manufactured by Aldrich) were placed in a reaction vessel having a capacity of 2 L and equipped with a stirrer, a nitrogen gas inlet, and a condensed water discharge port. The air in the reaction vessel was sufficiently replaced by nitrogen, and then the temperature was raised to 280°C. The mixture was reacted (polymerization reaction A) while stirring under a pressure of 0.6 MPa for 4 hours. After the pressure was released, the mixture was further reacted for 1 hour under a nitrogen stream to obtain a white solid which was a nylon 12 polymer having a weight average molecular weight of 6000 (hard segment [PA 12] having a chain extender attached to the end thereof).

### Treatment Step B

70.9 g of Polyoxypropylene-polytetramethylene glycol-polyoxypropylenediamine (PPG-PTMG-PPG) (manufactured by HUNTSMAN, JEFFAMINE XTJ-548, weight average molecular weight: 1700) as a soft segment, and 71 mg of tetra-tert-butoxyzirconium were added to 250 g of the nylon 12 polymer obtained as described above, and the reaction of the mixture (polymerization reaction B) was performed while stirring at 230°C for 6 hours. Then 1g of IRGANOX 1010 was added to the reaction product obtained by this reaction, and mixed, thereby obtaining a white thermoplastic polyamide elastomer (weight average molecular weight: 75,000) as a resin material.

### Example 2

In Example 2, an organic fiber was prepared under the same conditions as those of Example 1 except that the cord member of Example 1 was changed to an aramid fiber, and the organic fiber was coated with a resin material in the same manner as in Example 1, thereby preparing a laminate plate as a test piece 2.

### Examples 3 and 4

In Example 3, a resin coating treatment was performed in the same manner as in Example 1 except that TPA as the coating material of Example 1 was changed to a thermoplastic polyurethane elastomer (TPU), thereby preparing a laminate plate as a test piece 3. In Example 4, a resin coating treatment was performed in the same manner as in Example 1 except that TPA as the coating material of Example 2 was changed to a TPU, thereby preparing a laminate plate as a test piece 4.

As the TPU, ELASTOLLAN (ET 680) manufactured by BASF Co. was used as it was.

### Comparative Example 1

In Comparative Example 1, a cord member formed from a polyester fiber was placed in the coating apparatus as it was without an undercoating treatment and an RF treatment, and a resin coating treatment was performed in the same manner as in Example 1, thereby preparing a laminate plate as a test piece 5.

### Comparative Example 2

In Comparative Example 2, a cord member formed from an aramid fiber was placed in the coating apparatus as it was without an undercoating treatment and an RF treatment, and a resin coating treatment was performed in the same manner as in Example 1, thereby preparing a laminate plate as a test piece 6.

### Comparative Example 3

In Comparative Example 3, a polyester fiber obtained by a undercoating treatment performed in the same manner as in Example 1 was placed in the coating apparatus as it was without an RF treatment, and a resin coating treatment was performed in the same manner as in Example 2, thereby preparing a laminate plate as a test piece 7.

### Comparative Example 4

In Comparative Example 4, an aramid fiber obtained by an undercoating treatment performed in the same manner as Example 2 was placed in the coating apparatus as it was without an RF treatment, and a resin coating treatment was performed in the same manner as in Example 2, thereby preparing a laminate plate as a test piece 8.

### Comparative Example 5

In Comparative Example 5, a cord member formed from a polyester fiber obtained in the same manner as Example 1 was subjected to an RF treatment without an undercoating treatment, and then subjected to a resin coating treatment in the same manner as in Example 1, thereby preparing a laminate plate as a test piece 9.

### Comparative Example 6

In Comparative Example 6, a cord member formed from a aramid fiber obtained in the same manner as Example 2 was subjected to an RF treatment without an undercoating treatment, and then subjected to a resin coating treatment in the same manner as in Example 2, thereby preparing a laminate plate as a test piece 10.

### Comparative Example 7 to Comparative Example 12

In Comparative Example 7, a resin coating treatment was performed in the same manner as in Example 1 except that the TPA as the resin material of Comparative Example 1 was changed to a TPU, thereby preparing a laminate plate as a test piece 11. Similarly, as shown in Table 1 below, each of laminate plates as test pieces 12 to 16 in Comparative Examples 8 to 12 was prepared in the same manner as in Comparative Examples 2 to 6 except that the TPA used in the resin coating treatment in Comparative Examples 2, 3, 4, 5, and 6 were changed to a TPU in Comparative Examples 8, 9, 10, 11, and 12, respectively.

### Measurement of Adhesive Strength

The adhesive strength of each of the test pieces in Examples and Comparative Examples prepared above was determined by using a method of measuring an adhesive force of vulcanized rubber in a test piece described in International Publication (WO) No. 2010/125992. That is, for each of the test pieces, the adhesive strength between the organic fiber and the resin material was determined by a test method in accordance with "7. Peeling test" as defined in JIS K6301:1995. In the measurement, the organic fiber embedded in the laminate plate as the test piece was pulled out from the laminate plate at a constant tensile rate, and a force required to pull out one organic fiber from the laminate plate was represented as an adhesive strength (N/yarn).

### Results

**Table 1**

| | Example 1 | Example 2 | Comparative Example 1 | Comparative Example 2 | Comparative Example 3 | Comparative Example 4 | Comparative Example 5 | Comparative Example 6 |
|---|---|---|---|---|---|---|---|---|
| Coating material | TPA | TPA | TPA | TPA | TPA | TPA | TPA | TPA |
| Code member | Polyester fiber | Aramid fiber | Polyester fiber | Aramid fiber | Polyester fiber | Aramid fiber | Polyester fiber | Aramid fiber |
| Treatment method | Undercoating treatment + RF treatment | Undercoating treatment + RF treatment | No treatment | No treatment | Only undercoating treatment | Only undercoating treatment | Only RF treatment | Only RF treatment |
| Adhesive strength (N/yarn) | 16.3 | 19.4 | 1.9 | 2.6 | 9.9 | 12.1 | 4.3 | 6.4 |

**Table 2**

| | Example 3 | Example 4 | Comparative Example 7 | Comparative Example 8 | Comparative Example 9 | Comparative Example 10 | Comparative Example 11 | Comparative Example 12 |
|---|---|---|---|---|---|---|---|---|
| Coating material | TPU | TPU | TPU | TPU | TPU | TPU | TPU | TPU |
| Code member | Polyester fiber | Aramid fiber | Polyester fiber | Aramid fiber | Polyester fiber | Aramid fiber | Polyester fiber | Aramid fiber |
| Treatment method | Undercoating treatment + RF treatment | Undercoating treatment + RF treatment | No treatment | No treatment | Only undercoating treatment | Only undercoating treatment | Only RF treatment | Only RF treatment |
| Adhesive strength (N/yarn) | 16.6 | 18.9 | 1.6 | 2.2 | 11.2 | 14 | 3.1 | 4.8 |

The results of Tables 1 and 2 showed that, in both cases using the polyester fiber and the aramid fiber, a test piece (reinforcing layer) having a high peel strength can be obtained by performing the undercoating treatment and the RF treatment. Among them, it was shown that the undercoating treatment is important for improving the peel strength of the obtained member.

Thus, it was shown that the reinforcing layer in which the cord member and the resin material are sufficiently adhered can be obtained in a case in which the organic fiber is configured to include the cord member, the undercoat layer, and the RF layer, and the organic fiber is coated with the resin material.

## Claims

1. A tire (10) comprising:
a tire frame member (12) made of resin and including a bead portion (16) and a side portion (18) positioned on a tire radial direction outer side of the bead portion (16); and
a reinforcing layer (14) including an organic fiber (30) and a resin material with which the organic fiber (30) is coated,
wherein the organic fiber (30) comprises: a cord member (1) including at least one of an aramid fiber material or a polyester fiber material; an undercoat layer (2) provided on the cord member (1) and formed from a first composition including at least one of an epoxy compound or an isocyanate compound; and an adhesive layer provided on the undercoat layer (2) and formed from a second composition including a resorcinol-formaldehyde resin, **characterized in that**
the tire frame member (12) made of resin excludes vulcanized rubber.

2. The tire (10) according to claim 1, wherein the resin material included in the reinforcing layer (14) comprises a thermoplastic polyamide resin or a thermoplastic polyurethane resin.

3. The tire (10) according to claim 2, wherein the thermoplastic polyamide resin is a thermoplastic polyamide elastomer.

4. The tire (10) according to any one of claims 1 to 3, wherein the cord member (1) is a single twisted multifilament (M) obtained by twisting a plurality of monofilaments (f), or is obtained by twisting two or more of the multifilaments (M).

5. The tire (10) according to any one of claims 1 to 4, wherein the reinforcing layer (14) is disposed at the side portion (18).

## Patentansprüche

1. Reifen (10), der Folgendes umfasst:
ein Reifengerüstelement (12), das aus Harz hergestellt ist und einen Wulstabschnitt (16) und einen Seitenabschnitt (18), der auf einer in Reifenradialrichtung äußeren Seite des Wulstabschnitts (16) angeordnet ist, einschließt, und
eine Verstärkungslage (14), die eine organische Faser (30) und ein Harzmaterial, mit dem die organische Faser (30) überzogen ist, einschließt,
wobei die organische Faser (30) Folgendes umfasst: ein Kordelement (1), das mindestens eines von einem Aramid-Fasermaterial oder einem Polyester-Fasermaterial einschließt, eine Grundierungslage (2), die auf dem Kordelement (1) bereitgestellt und aus einer ersten Zusammensetzung gebildet ist, die mindestens eines von einer Epoxidverbindung oder einer Isocyanatverbindung einschließt, und eine Klebstofflage, die auf der Grundierungslage (2) bereitgestellt und aus einer zweiten Zusammensetzung gebildet ist, die ein Resorcin-Formaldehyd-Harz einschließt, **dadurch gekennzeichnet, dass**
das Reifengerüstelement (12), das aus Harz hergestellt ist, vulkanisierten Gummi ausschließt.

2. Reifen (10) nach Anspruch 1, wobei das Harzmaterial, das in der Verstärkungslage (14) eingeschlossen ist, ein thermoplastisches Polyamidharz oder ein thermoplastisches Polyurethanharz umfasst.

3. Reifen (10) nach Anspruch 2, wobei das thermoplastische Polyamidharz ein thermoplastisches Polyamid-Elastomer ist.

4. Reifen (10) nach einem der Ansprüche 1 bis 3, wobei das Kordelement (1) ein einzelnes verdrilltes Multifilament (M) ist, das durch Verdrillen mehrerer Monofilamente (f) erhalten wird, oder durch Verdrillen von zwei oder mehr der Multifilamente (M) erhalten wird.

5. Reifen (10) nach einem der Ansprüche 1 bis 4, wobei die Verstärkungslage (14) an dem Seitenabschnitt (18) angeordnet ist.

## Revendications

1. Bandage pneumatique (10), comprenant :
un élément de cadre du bandage pneumatique (12) composé de résine et incluant une partie de talon (16) et une partie de flanc (18) positionnée sur un côté externe, dans la direction radiale du bandage pneumatique, de la partie de talon (16) ; et
une couche de renforcement (14) incluant une fibre organique (30) et un matériau de résine dont la fibre organique (30) est revêtue ;
dans lequel la fibre organique (30) comprend : un élément de câblé (1) incluant au moins un parmi un matériau de fibre aramide et un matériau de fibre de polyester ; une couche constituant une sous-couche (2) agencée sur l'élément de câblé (1) et formée à partir d'une première composition incluant au moins un parmi un composé d'époxyde et un composé d'isocyanate ; et une couche adhésive agencée sur la sous-couche (2) et formée à partir d'une deuxième composition incluant une résine de résorcinol-formaldéhyde, **caractérisé en ce que** :
l'élément de cadre du bandage pneumatique (12) composé de résine ne contient pas de caoutchouc vulcanisé.

2. Bandage pneumatique (10) selon la revendication 1, dans lequel le matériau de résine inclus dans la couche de renforcement (14) comprend une résine de polyamide thermoplastique ou une résine de polyuréthane thermoplastique.

3. Bandage pneumatique (10) selon la revendication 2, dans lequel la résine de polyamide thermoplastique est un élastomère de polyamide thermoplastique.

4. Bandage pneumatique (10) selon l'une quelconque des revendications 1 à 3, dans lequel l'élément de câblé (1) est un multifilament à torsion simple (M) produit par torsion de plusieurs monofilaments (f), ou produit par torsion de deux ou de plusieurs multifilaments (M).

5. Bandage pneumatique (10) selon l'une quelconque des revendications 1 à 4, dans lequel la couche de renforcement (14) est disposée au niveau de la partie de flanc (18).
